# EUROPEAN PATENT SPECIFICATION

(11) **EP 3 345 381 B1**
(45) Date of publication and mention of the grant of the patent: **12.05.2021**
(21) Application number: 16888501.0
(22) Date of filing: 29.01.2016
(51) Int. Cl.: H04N 1/00

(54) **MOTION OF MEDIA PERPENDICULAR TO MEDIA FEED AXIS**
BEWEGUNG VON MEDIEN SENKRECHT ZUR MEDIENVORSCHUBACHSE
MOUVEMENT DE SUPPORT PERPENDICULAIRE À UN AXE DE DISTRIBUTION DE SUPPORT

(43) Date of publication of application: 11.07.2018
(73) Proprietor: Hewlett-Packard Development Company, L.P., Spring TX 77389 (US)
(72) Inventor: BHIDE, Saurabh Shripad, Vancouver, Washington 98683 (US); EWALD, Brent, Vancouver, Washington 98683 (US); SCHALK, Wesley R., Vancouver, Washington 98683 (US); MACKENZIE, Mark H., Vancouver, Washington 98683 (US)
(74) Representative: Haseltine Lake Kempner LLP
(86) International application number: PCT/US2016/015779
(87) International publication number: WO 2017/131773

(56) References cited:
- WO-A1-2015/185145
- US-A- 5 169 140
- US-A1- 2002 057 321
- US-A1- 2006 023 025
- US-A1- 2009 237 443
- US-A1- 2012 133 093
- US-A1- 2013 063 511

## Description

### BACKGROUND

Printers are widely used with computing equipment for obtaining hard copies of documents/data shown on the display screens of the computing equipment. MFPs (Multi-Function Printers) are now used in homes and offices and also in bigger business settings as part of larger document management systems. Functionalities such as copying, scanning, emailing and faxing are now available in the MFPs in addition to more sophisticated printing modes such as duplex printing. A page-wide array of nozzles in a printer produces ink drops which are delivered onto a paper via precise control of paper motion.

Reference may be made to US 5 169 140 A, which is related to a method of de-skewing and side registering a sheet. The method includes the step of driving a sheet non-differentially in a process direction with a sheet driver, the sheet having an unknown magnitude of side-to-side misregistration and an unknown initial angle of skew. The method further includes the steps of measuring the initial angle of skew with an initial skew sensing mechanism and driving the sheet differentially with the sheet driver to compensate for the magnitude of side-to-side misregistration and thereby induce a registration angle of skew. Moreover, the method includes the steps of measuring the registration angle of skew with a registration skew sensing mechanism and summing the initial angle of skew and the registration angle of skew so as to determine an absolute angle of skew. The method additionally includes the step of driving the sheet differentially with the sheet driver to compensate for the absolute angle of skew so that the sheet is deskewed and one edge of the sheet is side registered. Also disclosed is an apparatus for de-skewing and side registering a sheet having an unknown magnitude of side-to-side misregistration and an unknown initial angle of skew.

### BRIEF DESCRIPTION OF THE DRAWINGS

Features of the present disclosure are illustrated by way of example and not limited in the following figure(s), in which like numerals indicate like elements, and in which:
Figure 1 shows a schematic diagram of an example media drive mechanism for a printer.
Figure 2 illustrates the motion of a media in accordance with a bi-directional scheme of motion of the first and second rollers depicted in Figure 1.
Figure 3 illustrates the motion of a media in accordance with a unidirectional scheme of motion for the first and second rollers depicted in Figure 1.
Figure 4 illustrates a motion of a media in a multiple-zone unidirectional scheme of motion in accordance with an example of the present disclosure.
Figure 5 is a schematic diagram that shows the media being driven by a motion scheme in which a pair of additional edge sensors are used for determining the position of the media in accordance with an example of the present disclosure.
Figure 6 illustrates a flowchart of an example method of inducing a skew to move a media along the media feed direction.
Figure 7 is a flowchart of an example method of activating rollers in accordance with a bi-directional single-zone scheme.
Figure 8 is a flowchart of an example method of activating rollers in accordance with a scheme wherein an induced skew is corrected to shift the media perpendicular to the media feed direction.

### DETAILED DESCRIPTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. In the present disclosure, the term "includes" means includes but not limited thereto, the term "including" means including but not limited thereto. The term "based on" means based at least in part on. In addition, the terms "a" and "an" are intended to denote at least one of a particular element.

Printers generally move paper or media parallel to the paper axis or the media feed direction and perpendicular to the roller axes. By the way of illustration and not limitation, printing is achieved via a page-wide array of thousands of nozzles. Examples of printers are disclosed herein which comprise media moving mechanisms that 'induce' skew in the media repeatedly thereby shifting its center normal to the paper axis or media feed direction and parallel to the roller axis. A scanner array can be used to detect the shift in the edge of the media. The motion of the media progresses based on the detected shift and the desired skew. This enables certain technical effects such as but not limited to print head calibration, full bleed printing and front to back image registration on a duplex print job.

Currently re-used mass produced A sized (approximately 8.5 × 11 inches) or A4 sized (approximately 8.27 × 11.69 inches) scan bar or the scanner array is indexed perpendicular to the media feed direction to scan up to A3 sized (approximately 11.69 x 16.53 inches) paper or media which is the limit of the indexing motion. The printhead is wider than the A3 sized media, placing the outermost nozzles in a 'blind zone' of the scanner array. The scanner array is made up of individual scanning heads/dies which have blind spots around the seams between the individual heads/dies. Hence, the outermost nozzles remain uncalibrated. In some printers, the scanner array is re-indexed until it is at an acceptable location. Inducing skew as detailed herein can move the image with sufficient accuracy so that the printed image is moved out of the blind zone thereby enabling calibration of even the outermost nozzles.

Another area that the methodologies for inducing skew described below improve is the full bleed printing wherein the image is printed until the edge of the media without any margins. A pagewide array printer capable of full bleed printing has a printhead that is wider than the widest media in order to allow full bleed printing due to inherent media to printhead registration errors. This also leads to higher cost due to the need for the printhead to be wider than the media. The methods for inducing skew which are discussed below, facilitate accurate media to printhead registration allowing the printhead to be just as wide as the widest media and yet be able to print full bleed. The methodologies also aid in registering front and back side images on a duplex print job. This is a very useful feature for printing on pre-printed forms that are well registered so that the printed images are accurately aligned with the corresponding cells.

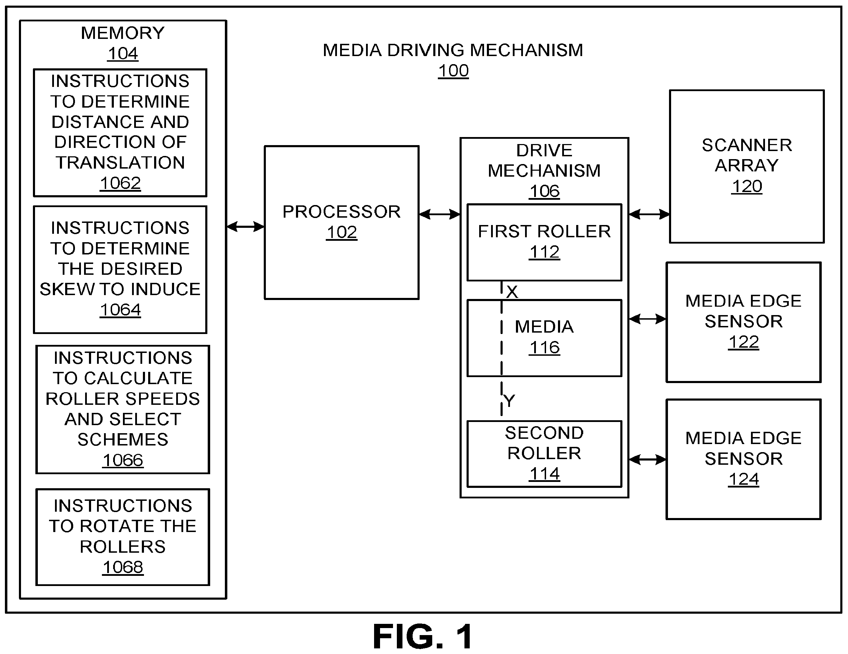

Figure 1 shows a schematic diagram of a media drive mechanism 100 for a printer in accordance with an example. The media driving mechanism 100 comprises a processor 102, a memory 104 communicatively coupled to the processor 102 and having stored thereon instructions executed by the processor 102 to activate and control a drive mechanism 106 including a shaft (not shown) that drives a pair of rollers - a first roller 112 and a second roller 114. The memory 104 may be any suitable medium that participates in providing instructions to the processor 102 for execution. For example, the memory 104 may be non-volatile media, such as an optical or a magnetic disk; volatile media, such as memory.

The rollers 112, 114 are positioned so that the second roller 114 is positioned at a distance from the first roller 112 perpendicular to the media feed direction. In an example, the first and second rollers 112, 114 can be referred to as the front and rear rollers respectively. Although one pair of rollers is shown in Figure 1 for brevity, however, many roller pairs (not shown) can be employed to induce the desired skew. In addition, the media drive mechanism 100 can include a scanner array 120 and optionally one or more edge sensors 122, 124 that enable determination of the skew induced in a media.

A media 116 to be printed on is moved by the first and second rollers 112, 114 under the control of the processor 102 which executes the instructions from the memory 104. In one example, the rollers 112, 114 are manipulated so that the media 116 is moved perpendicular to the paper axis X or perpendicular to the direction in which the media 116 is fed to the rollers 112, 114. Such motion is achieved by 'inducing' a skew in the position of the media 116 repeatedly via the rollers 112, 114. Attributes of the roller motion such as but not limited to, the degree of skew to induce, a scheme of motion to implement in order to achieve a desired skew and the number of iterations to execute can be determined by the processor 102 based on various factors. Some factors that the processor 102 employs to determine the motion attributes can include the position of the media 116, the distance by which the media 116 should be translated and a direction of such translation.

In an example, the direction and the distance of translation for the media 116 is also determined by the processor 102 based for example, on the technical effects that are to be achieved via such motion. Various technical effects can be achieved through the perpendicular motion as will be detailed further herein. Calibration of the print head, full bleed printing and front and back image registration are a few non-limiting examples of the technical effects that are improved via implementation of the methodologies discussed herein. The distance and the direction for the translation are determined by the processor 102 by executing the instructions 1062 from the memory 104. The direction and distance for the translation of the media 116 is used to determine the skew to induce in the media position relative to the media feed direction. The desired skew to induce can be determined by the processor 102 via executing the instructions 1064. In one example, simple geometric techniques can be used to determine the desired skew for inducing based on the translation of the media 116.

The desired skew to induce is further employed to select a scheme of motion for the rollers 112, 114 and to calculate the respective speeds for the rollers 112, 114. The processor 102 executes the instructions 1066 for selecting the scheme and calculating the speed differentials of the rollers 112, 114 for the selected scheme. Various uni-directional and bi-directional schemes can be implemented for the roller motions, such as but not limited to, 'a parallel park inversion' and 'skew correct to shift' or other schemes as detailed herein. The schemes determine the order in which the roller speeds are to be manipulated in order to achieve a desired final effect. Upon selection of the roller speeds and the scheme for their manipulation, the processor 102 sends signals to a shaft controlling the rollers via execution of the instructions 1068 to activate or rotate the rollers for the respective speeds in accordance with the selected scheme. Some schemes may be unidirectional wherein the media 116 is skewed while being fed in one direction whereas in other bi-directional schemes the media 116 maybe skewed while being fed in both, forward and backwards, directions in order to achieve its translation across a predetermined distance. In addition, multi-zone drive mechanisms may also be implemented wherein a plurality of the roller pairs are employed to achieve the translation of the media 116 across a predetermined distance. Execution of the instructions 1068 therefore, causes the first roller 112 and the second roller 114 to be rotated at the respective speeds in accordance with the selected scheme such that the desired skew is induced in the position of the media relative to the media feed direction.

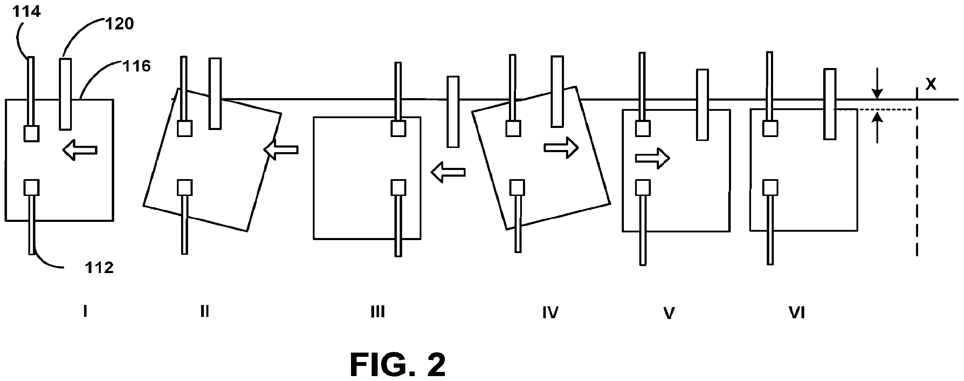

Figure 2 illustrates the motion of a media in accordance with a selected bi-directional scheme of motion of the first and second rollers 112, 114. This scheme can be considered to be a conceptual inversion of a car parallel parking in which the car (rollers) is fixed in space and the road (media) can move around. At step I of the first selected scheme, the media 116 is loaded and an edge of the media 116 is scanned with the scanner array 120. Based on the scanner array information regarding initial loaded position of the media 116 at step I, the processor 102 can determine the direction and distance of translation of the media. Upon the determination of the direction and distance of translation of the media 116, the processor 102 can further determine the skew to induce and the speeds of rotation of the first and second rollers 112, 114. In accordance with the bi-directional, single zone scheme of rotation, the first roller 112 is initially rotated faster than the second roller 114 for a predetermined distance to advance the media 116 along the media feed direction at step II. At step III, the second roller 114 is rotated faster than the first roller for a predetermined distance to advance the media along the media feed direction. At step IV, the first roller 112 is again driven faster than the second roller 114 for a predetermined distance so that the media 116 recedes along the media feed direction. At step V, the second roller 114 is rotated faster than the first roller for a predetermined distance to cause the media 116 to recede along the media feed direction. At step VI, the media 116 is straight but shifted with respect to its initial position at step I. The media edge is again scanned at step VI to determine if the distance translated is sufficient or if further iterations of steps II-V are required to move the media 116 further perpendicular to the media feed direction.

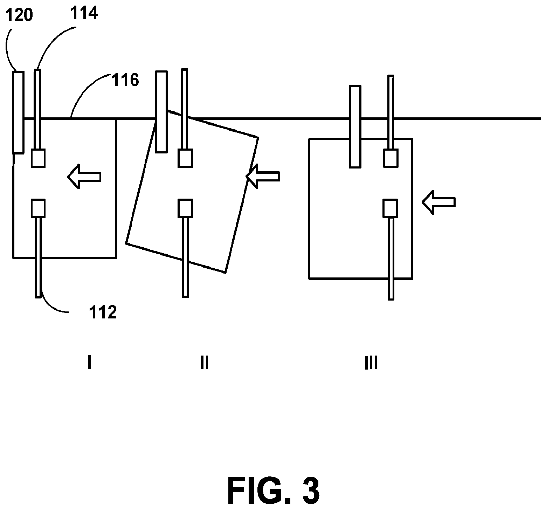

Figure 3 illustrates the motion of a media in accordance with a single zone, uni-directional scheme of motion for the first and second rollers 112, 114. At step I, the media 116 is loaded and an edge of the media 116 is scanned by a scanner array 120 to determine a direction and distance for the translation of the media 116. The respective speeds of rotation for the first and the second rollers are also determined by the processor 102. At step II, the first roller 112 is rotated faster than the second roller 114 for a predetermined distance to advance the media 116 along the media feed direction. At step III, the second roller 114 is rotated faster than the first roller 112 to advance the media 116 along the media feed direction. As seen from Figure 3, the media 116 is straightened at step III and moved perpendicular to the media feed direction by a certain distance. If it is desired to move the media 116 further along the media feed direction, steps II and III may be repeated.

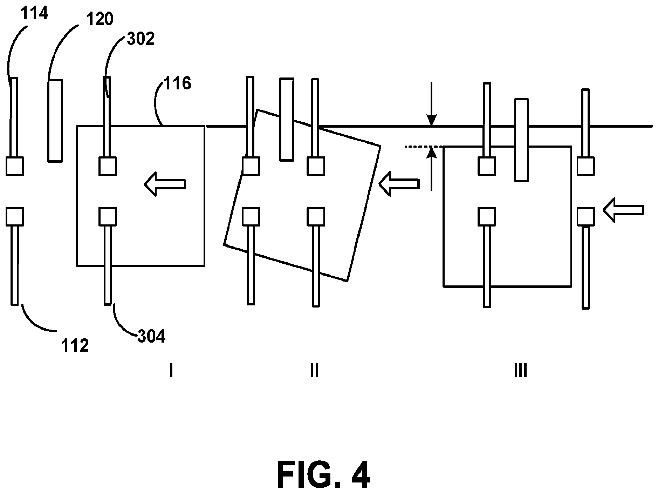

The schemes of motion discussed heretofore show a single pair of the first and second rollers 112, 114. In one example, multiple-zone drive mechanisms can be employed wherein multiple, independently driven roller pairs which are used for causing translation of the media 116 by a predetermined direction by a predetermined distance. Figure 4 illustrates a motion of a media 116 in a multiple-zone unidirectional scheme of motion. At step I, the direction and distance for translation is determined so that the speeds of the rollers 112, 114, 302, 304 and the number of iterations for which the motion scheme is to be repeated can be determined. In an example, the first pair of rollers 112, 114 and the second pair of rollers 302 and 304 are separated by a distance less than the media length along the media feed axis X. For such configuration, the first rollers 112 and 304 will rotate faster than the second rollers 302 and 114 for a predetermined distance to advance the media along the media feed axis at step II. At step III, the second rollers 114, 302 will rotate faster than the first rollers 112, 304 for a predetermined distance to advance the media along the media feed direction.

In an example, the first pair of rollers 112, 114 and the second pair of rollers 302 and 304 are separated by a distance greater than the media length along the media feed axis X. For such configuration, the first roller 304 of a second pair of rollers will rotate faster than the second roller 302 of the same pair for a predetermined distance to advance the media along the media feed direction. This motion of the rollers 302, 304 pushes the media 116 to the first pair of rollers 112, 114. At step III the second roller 114 of the first pair of rollers will be rotated faster than the first roller 112 of the first pair for a predetermined distance to advance the media along the media feed direction.

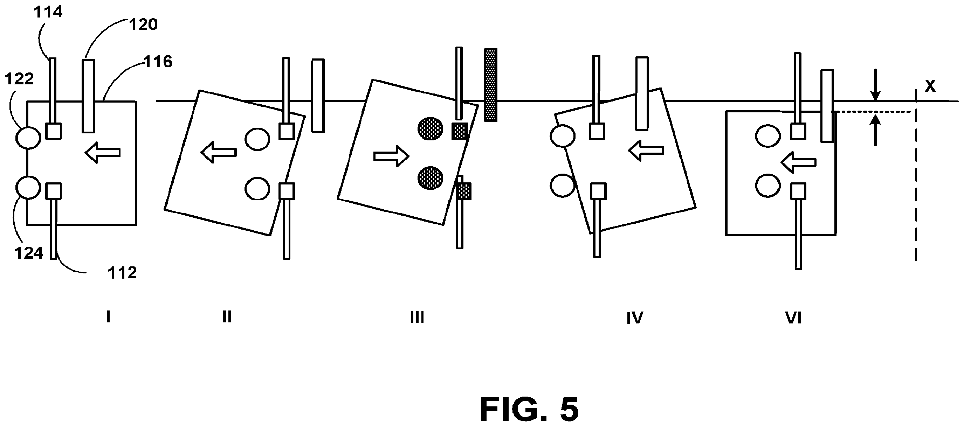

Figure 5 is a schematic diagram that shows the media 116 being driven by another motion scheme in which a pair of additional edge sensors 122, 124 may optionally be used for determining the position of the media 116 thereby configuring the media drive mechanism as a closed loop system. In an example, the scanner array 120 may be employed for determining the position of the media 116 as described above with respect to other schemes of motion thereby configuring the media drive mechanism as an open loop system thus avoiding the cost of addition sensor hardware.

At step I, the media is loaded and the edge is scanned with the scanner array 120. The direction and distance for moving the media 116 based on which the speeds of rotation of the rollers 112, 114 and the number of iterations for repeating the scheme is also determined. At step II, the first roller is rotated faster than the second roller thereby inducing skew to advance the media along the media feed direction. At step III, the media 116 is reversed through the duplex path even as the media is still positioned at an angle to the media feed direction. At step IV the skew may be measured, for example, by using the sensors 122, 124 and the measured skew is corrected via the motion of the first and the second rollers 112, 114. At step V, the skew correction process is concluded and the media is straightened and shifted along the media feed axis. At step V, the edge of the media 116 is scanned by the scanner array 120 and the aforementioned steps are repeated if needed to move the media 116 further along the media feed direction.

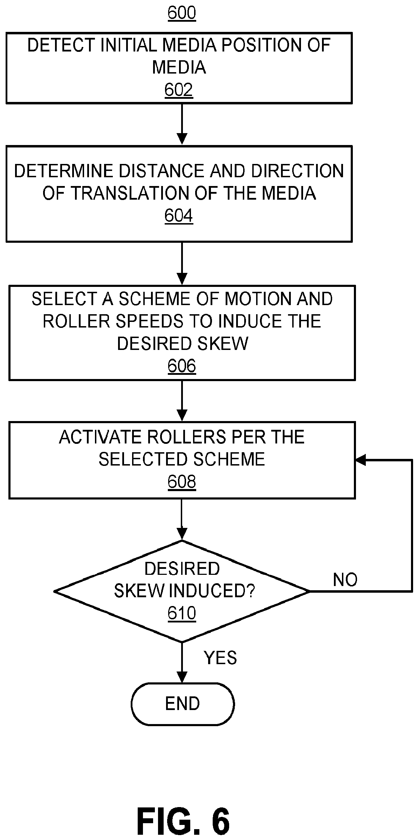

Figure 6 illustrates a flowchart 600 that details one example of a method of inducing a skew to move a media along the media feed direction. The method begins at 602, wherein an initial position of a media is detected. In an example, the distance and direction of traversal of the media along the media feed direction can determine the desired skew to induce in the initial or starting position of the media with respect to a media feed axis. Accordingly, the distance and direction of translation of the media 116 is determined at 604. At 606, a scheme of the motion for the rollers and the corresponding roller speeds are selected. In one example, the scheme can be selected from a plurality of schemes described herein subject to the availability of the requisite hardware. The rollers are activated at 608 to rotate at respective speeds in accordance with the selected scheme of motion. At 610, it is determined if the desired skew was induced. Such determination can be made, for example, via the position determination of the media by the sensor 122, 124 and the scanner array. If it is determined at 610 that the desired skew is induced, the rotatory motion of the rollers is ceased and the process terminates on the end block. If it is determined at 610 that the desired skew is not yet achieved, the process returns to 608 to further activate the rollers.

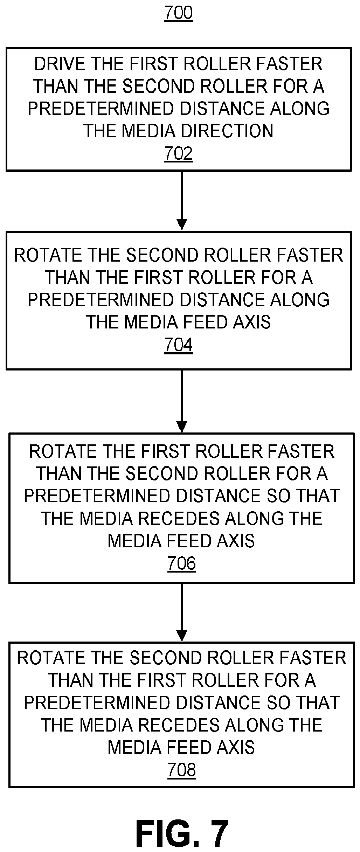

Figure 7 is a flowchart 700 that details a method of activating the rollers in accordance with a bi-directional, single-zone scheme. In accordance with this scheme, the first roller is driven or rotated faster than the second roller as shown at 702. In an example, the first roller is a front roller and the second roller is a rear roller and the rollers are spaced apart such that the second roller is positioned at a location with respect to the first roller that is perpendicular to the media feed direction. At 704, the second roller is rotated faster than the first roller for a predetermined distance along the media feed axis. At 706, the first roller is rotated faster than the second roller for a predetermined distance so that the media recedes or reverses along the media feed axis. At 708, the second roller is rotated faster than the first roller for a predetermined distance so that the media recedes along the media feed axis. For a uni-directional, single-zone scheme the rollers are activated so that the media 116 is skewed while it moves in one direction along the media feed axis. In an example, that includes multiple zones, the second roller of a pair of rollers may be initially rotated faster than the first roller of that pair and subsequently, the first roller of another pair of rollers are rotated faster than the second roller of the other pair.

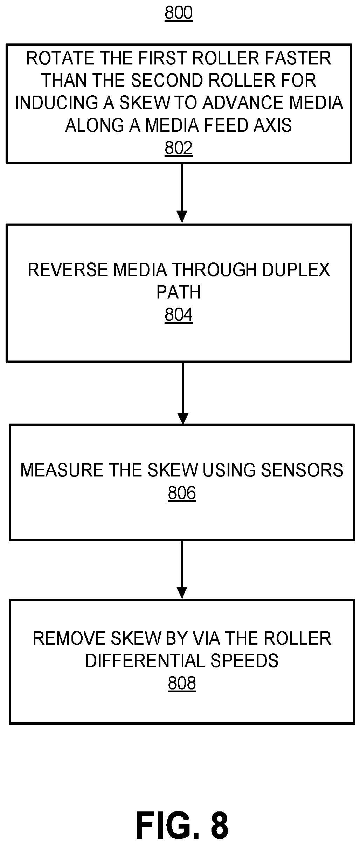

Figure 8 is a flowchart 800 that details a method of activating the rollers in accordance with a scheme wherein an induced skew is corrected to shift the media perpendicular to the media feed direction. The method begins at 802 wherein the first roller is rotated faster than the second roller for inducing a skew to advance media along a media feed axis. At 804, the media 116 is reversed through a duplex path even as the angle the media 116 makes with the media feed direction is maintained. The skew is measured using sensors such as sensors 122, 124 at 806. At 808, the skew is removed via producing the speed differentials in the rollers as detailed herein.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein are examples of the disclosure along with some variations. The terms, descriptions and figures used herein are set forth by way of illustration and are not meant as limitations. Many variations are possible within the scope of the disclosure, which is intended to be defined by the following claims.

## Claims

1. A printer comprising:
at least one pair of rollers comprising a first roller (112) and a second roller (114);
a processor (102); and
a memory (104) on which are stored machine readable instructions that are to cause the processor (102) to:
determine a media feed direction and distance for traversal by a media loaded into the printer;
determine a skew to be induced in a position of the media relative to a media feed axis;
select a scheme of motion for the first roller (112) and the second roller (114);
calculate respective speeds for the first roller (112) and the second roller (114) based on the selected scheme of motion, the traversal direction and distance of the media, wherein the second roller (114) is positioned at a location with respect to the first roller (112) that is perpendicular to the media feed axis; and
cause the first roller (112) and the second roller (114) to be rotated at the respective speeds such that the skew is induced in the position of the media relative to the media feed axis, wherein the rotation of the first and second rollers (112, 114) includes rotation in one direction to cause the media to be advanced along the media feed axis in the media feed direction and rotation in another direction to cause the media to be reversed along the media feed axis.

2. The printer of claim 1, wherein the instructions to determine the media feed direction and the distance for traversal further comprise instructions that are to cause the processor (102) to:
obtain position of an edge of the media from a scanner array.

3. The printer of claim 1, wherein instructions to cause the first roller (112) and the second roller (114) to be rotated at respective speeds further comprise instructions that are to cause the processor (102) to:
cause the first roller (112) to rotate faster than the second roller (114) such that the media advances along the media feed axis for a predetermined distance; and
cause the second roller (114) to rotate faster than the first roller (112) such that the media advances along the media feed axis for the predetermined distance.

4. The printer of claim 3, the memory further comprising instructions that cause the processor (102) to:
cause the first roller (112) and the second roller (114) to repeat the rotations with speed differentials until the media has shifted by a desired distance with respect to an initial position along the media feed axis.

5. The printer of claim 4, further comprising a plurality of independently driven roller pairs.

6. The printer of claim 3, wherein instructions to cause the first roller (112) and the second roller (114) to be rotated at the respective speeds further comprise instructions that are to cause the processor (102) to:
cause the second roller (114) to rotate faster than the first roller (112) such that the media recedes along the media feed axis for the predetermined distance;
cause the first roller (112) to rotate faster than the second roller (114) such that the media recedes along the media feed axis.

7. The printer of claim 6, the memory further comprising instructions that cause the processor (102) to:
cause the first roller (112) and the second roller (114) to repeat the rotations until the media is moved from a first position to a second position along the media feed axis.

8. The printer of claim 1, wherein instructions to cause the first roller (112) and the second roller (114) to be rotated at the respective speeds further comprise instructions that are to cause the processor (102) to:
cause the first roller (112) to rotate faster than the second roller (114) such that the media advances along the media feed axis for a predetermined distance until the desired skew is attained;
cause the media to be reversed through duplex path while maintaining the desired skew.

9. The printer of claim 8, wherein instructions to cause the first roller (112) and the second roller (114) to be rotated at the respective speeds further comprise instructions that are to cause the processor (102) to:
cause the second roller (114) to rotate faster than the first roller (112) such that the media moves along the media feed axis for the predetermined distance until the media is parallel to the media feed axis and shifted with respect to an initial position.

10. The printer of claim 9, the memory further comprising instructions that cause the processor (102) to:
cause the first roller (112) and the second roller (114) to repeat the rotations until the media has shifted by a desired distance with respect to the initial position.

11. The printer of claim 1, further comprising sensors (122, 124) to detect angle of the media with respect to the media feed axis.

12. A method comprising:
detecting an initial position of a media with respect to a media feed axis;
determining distance and a media feed direction of translation of the media along the media feed axis;
determining a skew to be induced in the initial position of the media;
selecting a scheme of motion and roller speeds to induce the skew;
activating rollers per the selected scheme;
determining if the skew is induced in the position of the media;
repeating the steps of activating the rollers and determining if the skew is induced, until it is determined that the skew is induced,
wherein activating the first and second rollers includes causing the first and second rollers to rotate in one direction to cause the media to be advanced along the media feed axis in the media feed direction and causing the first and second rollers to rotate in another direction to cause the media to be reversed along the media feed axis.

13. The method of claim 12 wherein selecting a scheme of motion comprises:
selecting the scheme of motion from a plurality of schemes based on hardware availability.

14. A non transitory computer-readable storage medium comprising instructions which, when executed by a computer, cause the printer according to any one of claims 1-11 to carry out the steps of the method according to claim 12.

## Patentansprüche

1. Ein Drucker, der Folgendes umfasst:
wenigstens ein Paar von Walzen, das eine erste Walze (112) und eine zweite Walze (114) umfasst;
einen Prozessor (102); und
einen Speicher (104), auf dem maschinenlesbare Anweisungen gespeichert sind, die den Prozessor (102) zu Folgendem veranlassen:
Bestimmen einer Medienzufuhrrichtung und einer Entfernung für ein Durchlaufen durch ein in den Drucker eingelegtes Medium;
Bestimmen einer Schräge, die in einer Position des Mediums relativ zu einer Medienzufuhrachse herbeizuführen ist;
Auswählen eines Bewegungsschemas für die erste Walze (112) und die zweite Walze (114);
Berechnen von jeweiligen Geschwindigkeiten für die erste Walze (112) und die zweite Walze (114) auf der Basis des ausgewählten Bewegungsschemas, der Durchlaufrichtung und der Entfernung des Mediums, wobei die zweite Walze (114) an einer Stelle in Bezug auf die erste Walze (112) positioniert ist, die senkrecht zu der Medienzufuhrachse ist; und
Veranlassen, dass die erste Walze (112) und die zweite Walze (114) mit den jeweiligen Geschwindigkeiten derart gedreht werden, dass die Schräge in der Position des Mediums relativ zu der Medienzufuhrachse herbeigeführt wird, wobei die Drehung der ersten und der zweiten Walze (112, 114) eine Drehung in eine Richtung, um zu veranlassen, dass das Medium entlang der Medienzufuhrachse in der Medienzufuhrrichtung vorgeschoben wird, und eine Drehung in eine andere Richtung einschließt, um zu veranlassen, dass das Medium entlang der Medienzufuhrachse umgekehrt wird.

2. Der Drucker nach Anspruch 1, wobei die Anweisungen zum Bestimmen der Medienzufuhrrichtung und der Entfernung zum Durchlaufen ferner Anweisungen umfassen, die den Prozessor (102) zu Folgendem veranlassen:
Erhalten einer Position einer Kante des Mediums von einem Scanner-Array.

3. Der Drucker nach Anspruch 1, wobei Anweisungen zum Veranlassen, dass die erste Walze (112) und die zweite Walze (114) mit entsprechenden Geschwindigkeiten gedreht werden, ferner Anweisungen umfassen, die den Prozessor (102) zu Folgendem veranlassen:
Veranlassen, dass die erste Walze (112) sich derart schneller als die zweite Walze (114) dreht, dass sich das Medium über eine zuvor bestimmte Entfernung entlang der Medienzufuhrachse vorschiebt; und
Veranlassen, dass die zweite Walze (114) sich derart schneller als die erste Walze (112) dreht, dass sich das Medium über die zuvor bestimmte Entfernung entlang der Medienzufuhrachse vorschiebt.

4. Der Drucker nach Anspruch 3, wobei der Speicher ferner Anweisungen umfasst, die den Prozessor (102) zu Folgendem veranlassen:
Veranlassen, dass die erste Walze (112) und die zweite Walze (114) die Drehungen mit Geschwindigkeitsdifferenzen wiederholen, bis sich das Medium über eine gewünschte Entfernung in Bezug auf eine Anfangsposition entlang der Medienzufuhrachse verschoben hat.

5. Der Drucker nach Anspruch 4, der ferner mehrere unabhängig angetriebene Walzenpaare umfasst.

6. Der Drucker nach Anspruch 3, wobei Anweisungen, die veranlassen, dass die erste Walze (112) und die zweite Walze (114) mit den jeweiligen Geschwindigkeiten gedreht werden, ferner Anweisungen umfassen, die den Prozessor (102) zu Folgendem veranlassen:
Veranlassen, dass die zweite Walze (114) sich derart schneller als die erste Walze (112) dreht, dass sich das Medium über die zuvor bestimmte Entfernung entlang der Medienzufuhrachse zurückzieht;
Veranlassen, dass die erste Walze (112) sich derart schneller als die zweite Walze (114) dreht, dass sich das Medium entlang der Medienzufuhrachse zurückzieht.

7. Der Drucker nach Anspruch 6, wobei der Speicher ferner Anweisungen umfasst, die den Prozessor (102) zu Folgendem veranlassen:
Veranlassen, dass die erste Walze (112) und die zweite Walze (114) die Drehungen wiederholen, bis das Medium von einer ersten Position in eine zweite Position entlang der Medienzufuhrachse bewegt wird.

8. Der Drucker nach Anspruch 1, wobei Anweisungen, die veranlassen, dass die erste Walze (112) und die zweite Walze (114) mit den jeweiligen Geschwindigkeiten gedreht werden, ferner Anweisungen umfassen, die den Prozessor (102) zu Folgendem veranlassen:
Veranlassen, dass die erste Walze (112) sich derart schneller als die zweite Walze (114) dreht, dass sich das Medium über eine zuvor bestimmte Entfernung entlang der Medienzufuhrachse vorschiebt, bis die gewünschte Schräge erreicht ist;
Veranlassen, dass das Medium durch einen Duplexpfad umgekehrt wird, während die gewünschte Schräge beibehalten wird.

9. Der Drucker nach Anspruch 8, wobei Anweisungen, die veranlassen, das die erste Walze (112) und die zweite Walze (114) mit den jeweiligen Geschwindigkeiten gedreht werden, ferner Anweisungen umfassen, die den Prozessor (102) zu Folgendem veranlassen:
Veranlassen, dass die zweite Walze (114) sich derart schneller als die erste Walze (112) dreht, dass sich das Medium über die zuvor bestimmte Entfernung entlang der Medienzufuhrachse bewegt, bis das Medium parallel zu der Medienzufuhrachse und in Bezug auf eine Anfangsposition verschoben ist.

10. Der Drucker nach Anspruch 9, wobei der Speicher ferner Anweisungen umfasst, die den Prozessor (102) zu Folgendem veranlassen:
Veranlassen, dass die erste Walze (112) und die zweite Walze (114) die Drehungen wiederholen, bis sich das Medium über eine gewünschte Entfernung in Bezug auf die Anfangsposition verschoben hat.

11. Der Drucker nach Anspruch 1, der ferner Sensoren (122, 124) umfasst, um einen Winkel des Mediums in Bezug auf die Medienzufuhrachse zu erfassen.

12. Ein Verfahren, das Folgendes umfasst:
Erfassen einer Anfangsposition eines Mediums in Bezug auf eine Medienzufuhrsachse;
Bestimmen der Entfernung und einer Medienzufuhrrichtung der Verschiebung des Mediums entlang der Medienzufuhrachse;
Bestimmen einer Schräge, die in der Anfangsposition des Mediums herbeizuführen ist;
Auswählen von einem Bewegungsschema und von Walzengeschwindigkeiten, um die Schräge herbeizuführen;
Aktivieren von Walzen gemäß dem ausgewählten Schema;
Bestimmen, ob die Schräge in der Position des Mediums herbeigeführt ist;
Wiederholen der Schritte des Aktivierens der Walzen und des Bestimmens, ob die Schräge herbeigeführt ist, bis bestimmt wird, dass die Schräge herbeigeführt ist, wobei das Aktivieren der ersten und der zweiten Walze das Veranlassen, dass die erste und die zweiten Walze sich in eine Richtung drehen, um zu veranlassen, dass das Medium entlang der Medienzufuhrachse in der Medienzufuhrrichtung vorgeschoben wird, und das Veranlassen, dass die erste und die zweite Walze sich in eine andere Richtung drehen, um zu veranlassen, dass das Medium entlang der Medienzufuhrachse umgekehrt wird, umfasst.

13. Das Verfahren nach Anspruch 12, wobei das Auswählen eines Bewegungsschemas Folgendes umfasst:
Auswählen des Bewegungsschemas aus mehreren Schemata auf der Basis einer Hardwareverfügbarkeit.

14. Nichtflüchtiges computerlesbares Speichermedium, das Anweisungen umfasst, die bei Ausführung durch einen Computer veranlassen, dass der Drucker nach einem der Ansprüche 1-11 die Schritte des Verfahrens nach Anspruch 12 ausübt.

## Revendications

1. Imprimante comprenant :
au moins une paire de rouleaux comprenant un premier rouleau (112) et un second rouleau (114) ;
un processeur (102) ; et
une mémoire (104) sur laquelle sont stockées des instructions lisibles par machine qui doivent amener le processeur (102) à :
déterminer une direction d'alimentation de support et une distance pour une traversée par un support chargé dans l'imprimante ;
déterminer une inclinaison à induire dans une position du support par rapport à un axe d'alimentation de support ;
sélectionner un schéma de mouvement pour le premier rouleau (112) et le second rouleau (114) ;
calculer les vitesses respectives pour le premier rouleau (112) et le second rouleau (114) sur la base du schéma de mouvement sélectionné, de la direction de traversée et de la distance du support, le second rouleau (114) étant positionné à un emplacement par rapport au premier rouleau (112) qui est perpendiculaire à l'axe d'alimentation de support ; et
amener le premier rouleau (112) et le second rouleau (114) à tourner aux vitesses respectives de telle sorte que l'inclinaison est induite dans la position du support par rapport à l'axe d'alimentation de support, la rotation des premier et second rouleaux (112, 114) comportant une rotation dans une direction pour amener le support à avancer le long de l'axe d'alimentation de support dans la direction d'alimentation de support et une rotation dans une autre direction pour amener le support à être inversé le long de l'axe d'alimentation de support.

2. Imprimante selon la revendication 1, dans laquelle les instructions pour déterminer la direction d'alimentation de support et la distance pour une traversée comprennent en outre des instructions qui doivent amener le processeur (102) à :
obtenir la position d'un bord du support à partir d'un réseau de lecteurs.

3. Imprimante selon la revendication 1, dans laquelle les instructions pour amener le premier rouleau (112) et le second rouleau (114) à tourner à des vitesses respectives comprennent en outre des instructions qui doivent amener le processeur (102) à :
amener le premier rouleau (112) à tourner plus vite que le second rouleau (114) de telle sorte que le support avance le long de l'axe d'alimentation de support sur une distance prédéterminée ; et
amener le second rouleau (114) à tourner plus vite que le premier rouleau (112) de telle sorte que le support avance le long de l'axe d'alimentation de support sur la distance prédéterminée.

4. Imprimante selon la revendication 3, la mémoire comprenant en outre des instructions qui amènent le processeur (102) à :
amener le premier rouleau (112) et le second rouleau (114) à répéter les rotations avec des différentiels de vitesse jusqu'à ce que le support se soit décalé d'une distance souhaitée par rapport à une position initiale le long de l'axe d'alimentation de support.

5. Imprimante selon la revendication 4, comprenant en outre une pluralité de paires de rouleaux entraînés indépendamment.

6. Imprimante selon la revendication 3, dans laquelle les instructions pour amener le premier rouleau (112) et le second rouleau (114) à tourner aux vitesses respectives comprennent en outre des instructions qui doivent amener le processeur (102) à :
amener le second rouleau (114) à tourner plus vite que le premier rouleau (112) de telle sorte que le support recule le long de l'axe d'alimentation de support sur la distance prédéterminée ;
amener le premier rouleau (112) à tourner plus vite que le second rouleau (114) de telle sorte que le support recule le long de l'axe d'alimentation de support.

7. Imprimante selon la revendication 6, la mémoire comprenant en outre des instructions qui amènent le processeur (102) à :
amener le premier rouleau (112) et le second rouleau (114) à répéter les rotations jusqu'à ce que le support soit déplacé d'une première position à une seconde position le long de l'axe d'alimentation de support.

8. Imprimante selon la revendication 1, dans laquelle les instructions pour amener le premier rouleau (112) et le second rouleau (114) à tourner aux vitesses respectives comprennent en outre des instructions qui doivent amener le processeur (102) à :
amener le premier rouleau (112) à tourner plus vite que le second rouleau (114) de telle sorte que le support avance le long de l'axe d'alimentation de support sur une distance prédéterminée jusqu'à ce que l'inclinaison souhaitée soit atteinte ;
amener le support à être inversé sur le trajet recto-verso tout en conservant l'inclinaison souhaitée.

9. Imprimante selon la revendication 8, dans laquelle les instructions pour amener le premier rouleau (112) et le second rouleau (114) à tourner aux vitesses respectives comprennent en outre des instructions qui doivent amener le processeur (102) à :
amener le second rouleau (114) à tourner plus vite que le premier rouleau (112) de telle sorte que le support se déplace le long de l'axe d'alimentation de support sur la distance prédéterminée jusqu'à ce que le support soit parallèle à l'axe d'alimentation de support et décalé par rapport à une position initiale.

10. Imprimante selon la revendication 9, la mémoire comprenant en outre des instructions qui amènent le processeur (102) à :
amener le premier rouleau (112) et le second rouleau (114) à répéter les rotations jusqu'à ce que le support se soit décalé d'une distance souhaitée par rapport à la position initiale.

11. Imprimante selon la revendication 1, comprenant en outre des capteurs (122, 124) pour détecter l'angle du support par rapport à l'axe d'alimentation de support.

12. Procédé comprenant :
la détection d'une position initiale d'un support par rapport à un axe d'alimentation de support ;
la détermination d'une distance et d'une direction d'alimentation de support de translation du support le long de l'axe d'alimentation de support ;
la détermination d'une inclinaison à induire dans la position initiale du support ;
la sélection d'un schéma de mouvement et de vitesses de rouleau pour induire l'inclinaison ;
l'activation des rouleaux selon le schéma sélectionné ;
la détermination du fait de savoir si l'inclinaison est induite dans la position du support ;
la répétition des étapes d'activation des rouleaux et de détermination du fait de savoir si l'inclinaison est induite, jusqu'à ce qu'il soit déterminé que l'inclinaison est induite, l'activation des premier et second rouleaux comportant le fait d'amener les premier et second rouleaux à tourner dans une direction pour amener le support à être avancé le long de l'axe d'alimentation de support dans la direction d'alimentation de support et le fait d'amener les premier et second rouleaux à tourner dans une autre direction pour amener le support à être inversé le long de l'axe d'alimentation de support.

13. Procédé selon la revendication 12, dans lequel la sélection d'un schéma de mouvement comprend :
la sélection du schéma de mouvement parmi une pluralité de schémas sur la base de la disponibilité de matériel.

14. Support de stockage non transitoire lisible par ordinateur comprenant des instructions qui, lorsqu'elles sont exécutées par un ordinateur, amènent l'imprimante selon l'une quelconque des revendications 1 à 11 à effectuer les étapes du procédé selon la revendication 12.
